# EUROPEAN PATENT APPLICATION

(11) **EP 3 975 606 A1**
(43) Date of publication of application: **30.03.2022**
(21) Application number: 20808996.1
(22) Date of filing: 15.05.2020
(51) Int. Cl.: H04W 24/04, H04W 24/08, H04B 17/309

(54) **ELECTRONIC DEVICE AND METHOD FOR WIRELESS COMMUNICATION, AND COMPUTER READABLE STORAGE MEDIUM**

(30) Priority: 22.05.2019 CN 201910429802
(71) Applicant: Sony Group Corporation, Tokyo 108-0075 (JP)
(72) Inventor: ZHOU, Ying, Beijing 100027 (CN); REN, Wenjing, Beijing 100027 (CN); LI, Dongru, Beijing 100027 (CN); TAO, Xiaofeng, Beijing 100027 (CN); CAO, Jianfei, Beijing 100028 (CN); XU, Jin, Beijing 100027 (CN)
(74) Representative: D Young & Co LLP
(86) International application number: PCT/CN2020/090457
(87) International publication number: WO 2020/233507

(57) **Abstract**

The present disclosure provides an electronic device and method for wireless communication, and a computer readable storage medium. The electronic device comprises a processing circuit, configured to: determine that a beam failure occurs in a downlink of an unlicensed frequency band and generate a beam failure recovery request; perform energy detection on a first channel of a selected candidate beam, so as to send the beam failure recovery request by means of the first channel when the energy detection indicates that the first channel is idle; start a first timer while enabling the energy detection; and in the case that the first timer expires but the energy detection does not indicate that the first channel is idle, reselect a candidate beam and perform energy detection on a first channel of the reselected candidate beam.

## Description

This application claims the priority to Chinese Patent Application No. 201910429802.7 titled "ELECTRONIC DEVICE AND METHOD FOR WIRELESS COMMUNICATION, AND COMPUTER READABLE STORAGE MEDIUM ", filed on May 22, 2019 with the China National Intellectual Property Administration (CNIPA), which is incorporated herein by reference in its entirety.

### FIELD

The present disclosure relates to the technical field of wireless communications, in particular to a beam management technology on an unlicensed band. More particularly, the present disclosure relates to an electronic apparatus and a method for wireless communications and a computer-readable storage medium.

### BACKGROUND

As a next generation of radio access manner for Long Term Evolution (LTE), New Radio (NR) is radio access technology (RAT) different from LTE. Multiple In Multiple Output (MIMO) technology may also be adopted in NR. In NR MIMO, beam management is very important for ensuring the communication quality. For example, in a case that the beam quality of a beam which is servicing user equipment is reduced to a certain degree, the beam becomes unavailable, and it is considered that a beam failure occurs. At this time, a beam failure recovery mechanism is required to reallocate a new beam for data transmission of the user equipment. In addition, on an unlicensed band, it is required to perform detection, such as energy detection, on a channel, before the user equipment accesses into the channel, to determine that the channel is idle, so as to ensure that the user equipment would not conflict with other user equipment after the user equipment accesses into the channel.

### SUMMARY

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

An electronic apparatus for wireless communications is provided according to an aspect of the present disclosure. The electronic apparatus includes processing circuitry. The processing circuitry is configured to: determine that a beam failure occurs in a downlink of an unlicensed band and generate a beam failure recovery request; perform energy detection with respect to a first channel of a selected candidate beam, so as to transmit the beam failure recovery request via the first channel when the energy detection indicates the first channel being idle; start a first timer at the same time as the energy detection begins; and in a case that the energy detection does not indicate the first channel being idle when the first timer expires, reselect a candidate beam and perform the energy detection with respect to a first channel of the newly selected candidate beam.

A method for wireless communications is provided according to an aspect of the present disclosure. The method includes: determining that a beam failure occurs in a downlink of an unlicensed band and generating a beam failure recovery request; and performing energy detection with respect to a first channel of a selected candidate beam, so as to transmit the beam failure recovery request via the first channel when the energy detection indicates the first channel being idle; starting a first timer at the same time as the energy detection begins; and in a case that the energy detection does not indicate the first channel being idle when the first timer expires, reselecting a candidate beam and performing the energy detection with respect to a first channel of the newly selected candidate beam.

With the electronic apparatus and the method according to the aspects of the present disclosure, the beam failure recovery request can be quickly transmitted by timely replacing a candidate beam in a case that channel resources corresponding to the candidate beam are occupied for a long time period, thereby reducing the delay of the beam failure recovery.

An electronic apparatus for wireless communications is provided according to another aspect of the present disclosure. The electronic apparatus includes processing circuitry. The processing circuitry is configured to: in a case that a beam failure occurs in a downlink of an unlicensed band, transmit a beam failure recovery request to a base station on a first channel of a selected candidate beam; monitor a beam failure recovery response from the base station within a dynamic time window after transmitting the beam failure recovery request; and retransmit the beam failure recovery request in a case of monitoring no beam failure recovery response and monitor within a new dynamic time window. Duration of the dynamic time window is positively correlated to the number of times of the beam failure recovery request having been transmitted.

A method for wireless communications is provided according to another aspect of the present disclosure. The method includes: in a case that a beam failure occurs in a downlink of an unlicensed band, transmitting a beam failure recovery request to a base station on a first channel of a selected candidate beam; monitoring a beam failure recovery response from the base station within a dynamic time window after transmitting the beam failure recovery request; and retransmitting the beam failure recovery request in a case of monitoring no beam failure recovery response and monitoring within a new dynamic time window. Duration of the dynamic time window is positively correlated to the number of times of the beam failure recovery request having been transmitted.

With the electronic apparatus and the method according to the aspects of the present disclosure, requirements of the beam failure recovery processing on the unlicensed band can be adapted by adopting the dynamic time window mechanism, thereby improving efficiency of the beam failure recovery and reducing the delay for the beam failure recovery.

An electronic apparatus for wireless communications is provided according to another aspect of the present disclosure. The electronic apparatus includes processing circuitry. The processing circuitry is configured to: determine that a beam failure occurs in a downlink of an unlicensed band and generate a beam failure recovery request; and perform energy detection with respect to a first channel of a selected candidate beam, so as to transmit the beam failure recovery request via the first channel when the energy detection indicates the first channel being idle. The candidate beam may be selected by multiple user equipment simultaneously.

A method for wireless communications is provided according to another aspect of the present disclosure. The method includes: determining that a beam failure occurs in a downlink of an unlicensed band and generating a beam failure recovery request; and performing energy detection with respect to a first channel of a selected candidate beam, so as to transmit the beam failure recovery request via the first channel when the energy detection indicates the first channel being idle. The candidate beam may be selected by multiple user equipment simultaneously.

With the electronic apparatus and the method according to the aspects of the present disclosure, the channel for transmitting the beam failure recovery request can be competitively used among multiple user equipment, thereby reducing the channel overhead.

An electronic apparatus for wireless communications is provided according to another aspect of the present disclosure. The electronic apparatus includes processing circuitry. The processing circuitry is configured to: generate configuration for a beam failure recovery operation of user equipment and contain the configuration in a radio resource control signaling to be provided to the user equipment, and generate a beam failure recovery request response in response to a beam failure recovery request from the user equipment. The configuration includes one or more of the following: time duration of a first timer for timing energy detection of a candidate beam, the number of times for reselecting the candidate beam with respect to one beam failure, setting of a dynamic time window for the user equipment to wait for the beam failure recovery response, the number of times for transmitting the beam failure recovery request with respect to one beam failure, and time duration of a second timer for timing the waiting of the user equipment for the beam failure recovery response.

A method for wireless communications is provided according to another aspect of the present disclosure. The method includes: generating configuration for a beam failure recovery operation of user equipment and containing the configuration in a radio resource control signaling to be provided to the user equipment, and generating a beam failure recovery request response in response to a beam failure recovery request from the user equipment. The configuration includes one or more of the following: time duration of a first timer for timing energy detection of a candidate beam, the number of times for reselecting the candidate beam with respect to one beam failure, setting of a dynamic time window for the user equipment to wait for the beam failure recovery response, the number of times for transmitting the beam failure recovery request with respect to one beam failure, and time duration of a second timer for timing the waiting of the user equipment for the beam failure recovery response.

With the electronic apparatus and the method according to the aspects of the present disclosure, the beam failure recovery operation of the user equipment can be configured, thereby achieving the beam failure recovery with high efficiency and low delay.

According to other aspects of the present disclosure, there are further provided computer program codes and computer program products for implementing the methods for wireless communications above, and a computer readable storage medium having recorded thereon the computer program codes for implementing the methods for wireless communications described above.

These and other advantages of the present disclosure will be more apparent by illustrating in detail a preferred embodiment of the present disclosure in conjunction with accompanying drawings below.

### BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:
Figure 1 is a block diagram showing function modules of an electronic apparatus for wireless communications according to an embodiment of the present disclosure;
Figure 2 is a schematic diagram showing a case in which multiple user equipment simultaneously detect beam failures and transmit beam failure recovery requests to a base station;
Figure 3 is a block diagram showing functional modules of an electronic apparatus for wireless communications according to an embodiment of the present disclosure;
Figure 4 is a schematic diagram showing a case in which beam failure recovery requests transmitted by two user equipment collide with each other;
Figure 5 is another schematic diagram showing a case in which beam failure recovery requests transmitted by two user equipment collide with each other;
Figure 6 shows an example of a mapping relationship between a MAC CE format and a candidate beam index;
Figure 7 shows an example of a mapping relationship between a new channel status information format and a candidate beam index;
Figure 8 is a block diagram showing function modules of an electronic apparatus for wireless communications according to another embodiment of the present disclosure;
Figure 9 is a schematic diagram showing an example of a case where a candidate beam is detected to be occupied;
Figure 10 shows an example that the first timer expires;
Figure 11 shows an example that a first channel is detected to be idle when a first timer has not expired;
Figure 12 is a block diagram showing function modules of an electronic apparatus for wireless communications according to another embodiment of the present disclosure;
Figure 13 shows an example for setting a dynamic time window;
Figure 14 is a block diagram showing functional modules of an electronic apparatus for wireless communications according to another embodiment of the present disclosure;
Figure 15 is a schematic diagram showing detecting a reference signal receiving power of a current candidate beam before a beam failure recovery request is retransmitted;
Figure 16 is a block diagram showing function modules of an electronic apparatus for wireless communications according to another embodiment of the present disclosure;
Figure 17 shows an example of an information procedure between a base station and user equipment;
Figure 18 is a flow chart of a method for wireless communications according to an embodiment of the present disclosure;
Figure 19 is a flow chart of a method for wireless communications according to another embodiment of the present disclosure;
Figure 20 is a flow chart of a method for wireless communications according to another embodiment of the present disclosure;
Figure 21 is a flow chart of a method for wireless communications according to another embodiment of the present disclosure;
Figure 22 is a block diagram showing a first example of an exemplary configuration of an eNB or gNB to which the technology according to the present disclosure may be applied;
Figure 23 is a block diagram showing a second example of an exemplary configuration of the eNB or gNB to which the technology according to the present disclosure may be applied;
Figure 24 is a block diagram showing an example of an exemplary configuration of a smartphone to which the technology according to the present disclosure may be applied;
Figure 25 is a block diagram showing an example of an exemplary configuration of a car navigation apparatus to which the technology according to the present disclosure may be applied; and
Figure 26 is a block diagram of an exemplary block diagram illustrating the structure of a general purpose personal computer capable of realizing the method and/or device and/or system according to the embodiments of the present disclosure.

### DETAILED DESCRIPTION OF EMBODIMENTS

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a business, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

### <First Embodiment

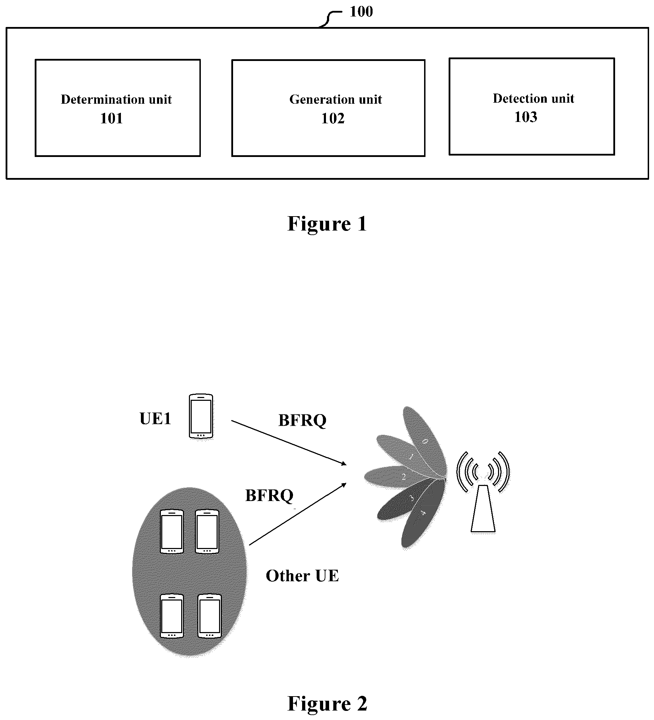

Figure 1 is a block diagram showing function modules of an electronic apparatus 100 for wireless communications according to an embodiment of the present disclosure. As shown in Figure 1, the electronic apparatus 100 includes a determination unit 101, a generation unit 102 and a detection unit 103. The determination unit 101 is configured to determine that a beam failure occurs in a downlink of an unlicensed band. The generation unit 102 is configured to generate a beam failure recovery request (BFRQ). The detection unit 103 is configured to perform energy detection with respect to a first channel of a selected candidate beam, so as to transmit the BFRQ via the first channel when the energy detection indicates the first channel being idle. One candidate beam may be simultaneously selected by multiple user equipment.

The determination unit 101, the generation unit 102 and the detection unit 103 may be implemented by one or more processing circuitries, and the processing circuitries may be implemented, for example, as a chip. Moreover, it should be understood that the various functional units in the apparatus shown in Figure 1 are only logical modules divided according to their specific functions, and are not intended to limit specific implementation manners.

The electronic apparatus 100 may be, for example, arranged on user equipment (UE) side, or may be communicatively connected to the UE. Here, it is to be further noted that the electronic apparatus 100 may be implemented in a chip level or an apparatus level. For example, the electronic apparatus 100 may function as the UE itself and may further include external devices such as storage, a transceiver or the like (not shown in Figure 1). The storage may be configured to store programs which are required to be executed when the UE implements various functions and related data information. The transceiver may include one or more communication interfaces to support communications with different apparatus (for example, a base station, other UE and the like). Implementations of the transceiver are not limited herein. This is also applicable to other configuration examples of the electronic apparatus on the UE side described subsequently.

In addition, it should be noted that first, second and the like in the present disclosure are only used for distinguishing, rather than for describing a particular order.

A beam failure recovery mechanism performed on the UE side may include, for example, a beam failure determination stage, a candidate beam identification stage, a BFRQ transmission stage and a beam failure recovery request response (BFRR) acquisition stage. At the beam failure determination stage, UE detects beam quality of a current serving beam to determine whether the current serving beam meets a beam failure triggering condition. At the candidate beam identification stage, a candidate beam that may be used as an alternative for the current serving beam is selected from other beams. At the BFRQ transmission stage, a BFRQ is transmitted to a base station (or a transceiver, hereinafter simply referred to as the base station), and the BFRQ may include, for example, information for identifying the UE and information of the candidate beam. At the BFRR acquisition stage, the UE monitors a response to the BFRQ from the base station within a specific time window.

In Rel-15, it is only determined that a physical random access channel (PRACH) based on non-competition serves as a channel for transmitting the BFRQ currently. Each PRACH is associated with one candidate beam. In this case, dedicated resources should be configured and reserved for each UE. Therefore, overhead is large for a cell connected with a large number of UEs.

In the embodiment, with respect to the unlicensed band, a solution of competitive use of a channel for transmitting the BFRQ is proposed. Specifically, one candidate beam may be simultaneously selected as respective candidate beams by multiple UEs for which beam failures occur.

Figure 2 is a schematic diagram showing a case that multiple UEs simultaneously detect that beam failures occur and transmit BFRQs to a base station (gNB). A UE may, for example, select the candidate beam based on a reference signal receiving power (RSRP) of each beam. For example, a beam with the highest RSRP is selected as the candidate beam. Therefore, a case that multiple UEs select the same candidate beam may occur.

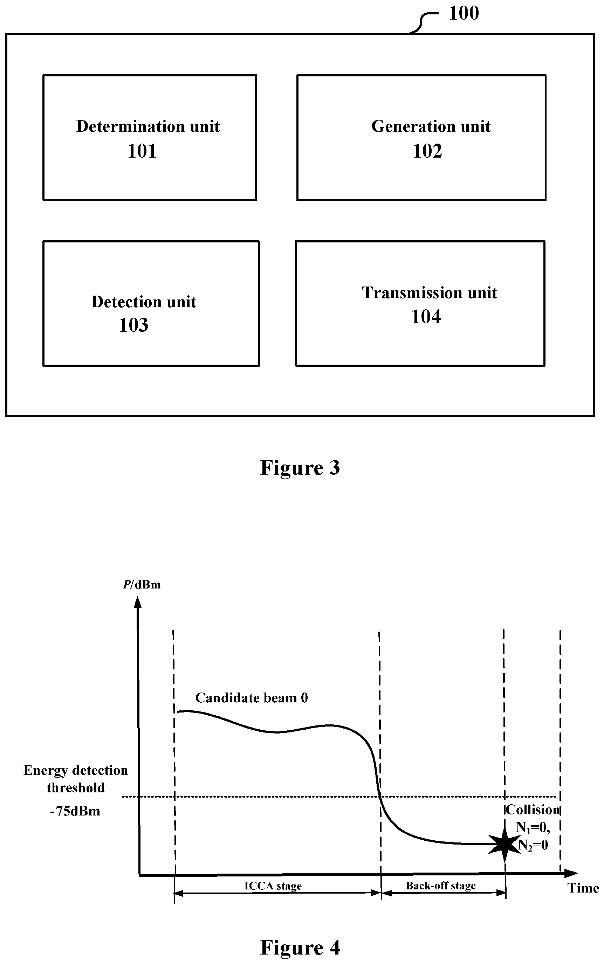

As described above, in a case that the determination unit 101 determines that the beam failure occurs, the generation unit 102 generates the BFRQ, so that the UE transmits the BFRQ to the base station using the selected candidate beam. In order to access to the channel on the unlicensed band, it is first required to detect whether the channel is idle, therefore, the detection unit 103 performs the energy detection with respect to the first channel of the candidate beam. Here, the energy detection is implemented by determining whether the channel is idle by detecting whether there is a signal transmitting on the channel, for example, by using a listen before talk (LBT) mechanism. The LBT mechanism may include multiple categories, such as a 25us LBT mechanism, a cat.4 LBT mechanism and the like. As shown in Figure 3, the electronic apparatus 100 further includes a transmission unit 104. In a case that the detection unit 103 detects that the first channel is idle, the transmission unit 104 transmits the BFRQ via the first channel.

In a case that the multiple UEs simultaneously transmitting the BFRQs select different candidate beams, no matter whether the selected candidate beams are idle, no collision would occurs among the BFRQs.

In a case that two or more UEs simultaneously transmitting the BFRQs select the same candidate beam, collision may occur. Here, it is assumed that each UE detects the channel (that is, the first channel) of the candidate beam for transmitting the BFRQ by using the Cat.4 LBT mechanism. The Cat.4 LBT mechanism includes an initial clear channel assessment (ICCA) stage and a back-off stage. Time duration of the back-off stage is defined by a randomly generated random number N. In a case that a result of the energy detection of the channel is lower than a predetermined threshold, that is, the result of the energy detection indicates that the channel is idle, the random number N is reduced by one. If the result of the energy detection still indicates that the channel is idle when N is reduced to zero, the LBT mechanism is completed, and the UE may use the channel to transmit the BFRQ.

The following describes the possible situations in the example that UE1 and other UE select the same candidate beam to simultaneously transmit BFRQs. For convenience of description, UE2 is taken as an example of other UE. However, it should be understood this is not limited and there may be multiple other UEs. In a case that the first channel is occupied at the ICCA stage and then becomes idle, if a random number Ni generated by the UE1 is different from a random number N₂ generated by the UE2, the UE1 performs back-off for time duration ti determined by N₁, and the UE2 performs back-off for time duration t2 determined by N₂. It is assumed that N₁ is greater than N₂, ti is greater than t₂, and the UE2 first transmits the BFRQ. In this case, no collision occurs. However, if Ni is equal to N₂, the UE1 and the UE2 perform back-off for the same time duration, and then simultaneously transmit the BFRQs, resulting in collision, as shown in Figure 4.

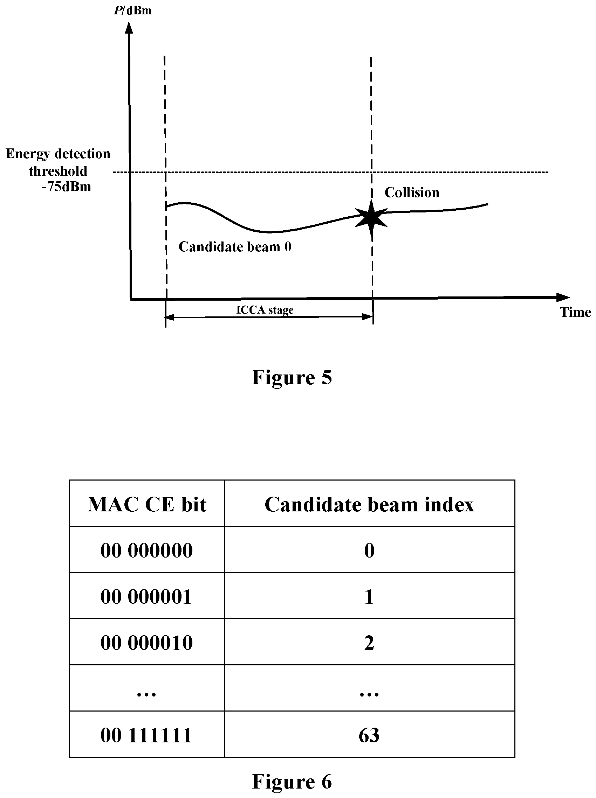

On the other aspect, in a case that the first channel is not occupied at the ICCA stage, the UE1 and the UE2 simultaneously transmit the BFRQs, resulting in collision, as shown in Figure 5.

In the case that collision occurs, the UE1 and the UE2 perform random back-off respectively, and then retransmit the BFRQs. The time duration of random back-off of each UE is randomly generated by the UE. In addition, although the collision described above is a collision between two BFRQs simultaneously transmitted, the present disclosure is not limited thereto. In a case that a BFRQ transmitted by one UE collides with a signaling and data transmitted by other UE on a first channel of the same candidate beam, the UE also performs random back-off and then retransmits the BFRQ. Other UE may be UE in the same communication system or UE in other communication system, such as UE in a Wi-Fi system. The signaling and the data transmitted by other UE may be various data, and is not limited to the BFRQ. Correspondingly, the first channel may be various uplink channels for other UE, such as the PRACH, a physical uplink control channel (PUCCH) and a physical uplink shared channel (PUSCH).

In the embodiment, the first channel for transmitting the BFRQ may be the PRACH, the PUCCH or the PUSCH.

In a case that the first channel is the PUCCH, the transmission unit 104 informs the base station that the beam failure has occurred via a scheduling request (SR) on the PUCCH, and transmits the BFRQ using PUSCH resources allocated by the base station for the UE based on the SR. In this case, the BFRQ includes, for example, a candidate beam index.

For example, the SR may indicate occurrence of a beam failure event by using a specific all-zero or all-one sequence. In addition, the transmission unit 104 may transmit the candidate beam index to the base station via a MAC CE. In a case that the base station supports up to 64 candidate beams for the beam failure recovery, a new 8-bit MAC CE may be defined, in which the first two bits may be reserved (for example, the first two bits may be set to zeros), and the remaining 6 bits are used to indicate one of the 64 candidate beams. Figure 6 shows an example of a mapping relationship between a MAC CE format and a candidate beam index.

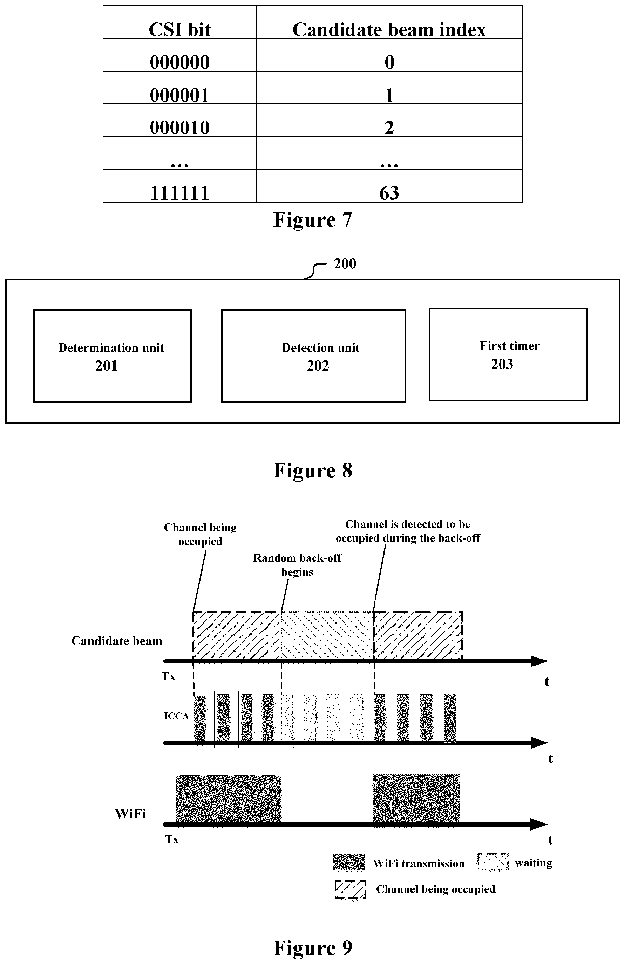

Alternatively, the transmission unit 104 may further transmit the BFRQ via newly defined channel status information (CSI) on the PUCCH. The newly defined CSI includes a specific bit sequence representing the selected candidate beam. In the case that the base station supports up to 64 candidate beams for the beam failure recovery, a new 6-bit CSI format may be defined. Figure 7 shows an example of a mapping relationship between a new CSI format and a candidate beam index.

In a case that the first channel is the PUSCH, the transmission unit 104 may transmit the BFRQ via the newly defined MAC CE. The newly defined MAC CE includes a specific bit sequence representing the selected candidate beam. In this case, the newly defined MAC CE format shown in Figure 6 may be adopted likewise, which is not repeated herein.

It should be noted that various examples of the first channel described above may be applied in the embodiments of the present disclosure, which are not repeated hereinafter.

The electronic apparatus 100 according to the embodiment of the present embodiment competitively uses the channel for transmitting the BFRQ among multiple UEs, thereby reducing the channel overhead.

### <Second Embodiment

Figure 8 is a block diagram showing function modules of an electronic apparatus 200 for wireless communications according to another embodiment of the present disclosure. The electronic apparatus 200 includes a determination unit 201, a detection unit 202 and a first timer 203. The determination unit 201 is configured to determine that a beam failure occurs in a downlink of an unlicensed band and generate a BFRQ. The detection unit 202 is configured to perform energy detection with respect to a first channel of a selected candidate beam, so as to transmit the BFRQ via the first channel when the energy detection indicates the first channel being idle. The first timer 203 is configured to be started at the same time as the energy detection begins. The detection unit 202 is further configured to reselect a candidate beam and perform energy detection with respect to a first channel of the reselected candidate beam, in a case that the energy detection does not indicate the first channel being idle when the first timer 203 expires.

Similarly, the determination unit 201, the detection unit 202 and the first timer 203 may be implemented by one or more processing circuitries, and the processing circuitries may be implemented, for example, as a chip. Moreover, it should be understood that various functional units in the apparatus shown in Figure 8 are only logical modules divided according to their specific functions, and are not intended to limit specific implementation manners. Similarly, the electronic apparatus 200 may be, for example, provided on user equipment (UE) side, or may be communicatively connected to the UE.

Here, it is further to be noted that the electronic apparatus 200 may be implemented in a chip level or an apparatus level. For example, the electronic apparatus 200 may function as the use equipment itself and may further include an external device such as storage, a transceiver or the like (not shown in Figure 8). The storage may be configured to store programs which are required to be executed when the UE implements various functions and related data information. The transceiver may include one or more communication interfaces to support communications with different apparatus (for example, a base station, other UE and the like). Implementations of the transceiver are not limited herein.

Similarly, as described in the first embodiment, in a case that a beam failure occurs on the unlicensed band, before the BFRQ is transmitted on the first channel (for example, the PRACH, the PUCCH or the PUSCH described in the first embodiment) of the selected candidate beam, it is first required to perform energy detection on the first channel, so as to transmit the BFRQ when the energy detection indicates the channel being idle. Here, energy detection may be implemented by the LBT mechanism. The LBT mechanism includes, for example, the Cat.4 LBT mechanism and the 25us LBT mechanism.

However, in a case that multiple UEs connect to one cell and select the same beam as the candidate beam, or in a case that other UE in the cell or even UE of another system, such as UE of a Wi-Fi system, selects the same beam to initiate a random access or transmit data or signaling, the candidate beam may be occupied for a long time period. Figure 9 is a schematic diagram showing a detected occupancy situation of a candidate beam in a case of adopting the Cat. 4 LBT mechanism. The channel is detected to be occupied at the ICCA stage, and then the back-off stage begins. Although the channel may be idle in the back-off stage, the LBT is not completed and thus the back-off continues. Since the Wi-Fi system occupies the channel again, it is detected that the channel is occupied at the back-off stage, and the UE can only use the channel to transmit the BFRQ at least waiting until the Wi-Fi system releases the channel.

In order to transmit the BFRQ as soon as possible to reduce a delay of the beam failure recovery processing, the electronic device 200 in the embodiment is provided with the first timer 203 to limit the time duration for energy detection of the first channel.

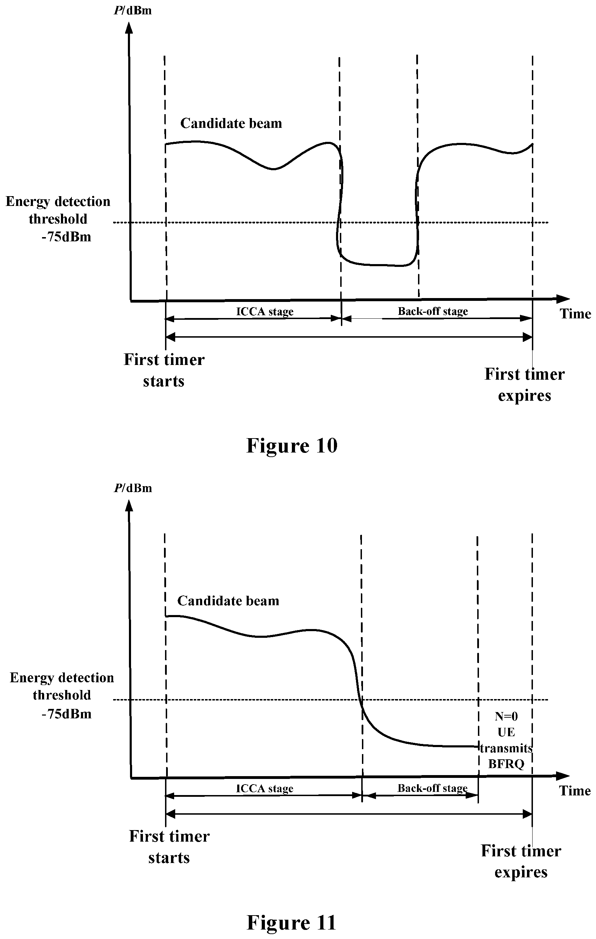

For example, in the case of adopting the Cat.4 LBT mechanism, when the first timer expires and the random number N has not been reduced to be zero, that is, the LBT has not been completed yet, it is considered that the first channel of the candidate beam is occupied for a long time period. In order to transmit the BFRQ as soon as possible to reduce the delay, the detection unit 102 interrupts the current Cat.4 LBT, reselects a candidate beam, and performs energy detection with respect to a first channel of the newly selected candidate beam. Figure 10 shows an example that the first timer expires, in which the back-off stage is not ended when the first timer expires.

The candidate beam may be selected based on the RSRP of the beam. The reselected candidate beam may be, for example, a beam whose RSRP is only less than that of the previous selected candidate beam. As an example, the number of times of reselecting the candidate beam may also be limited. In a case that the number of times of the candidate beam having been reselected exceeds a predetermined number, the detection unit 102 is configured to generate a report message to inform an upper layer protocol. In such a case, it is difficult to achieve the beam failure recovery, and thus it is required for the upper layer protocol to process. Alternatively, when the first timer expires, the event may be informed to the upper layer protocol which makes a decision.

Information of time duration of the first timer and the predetermined number may both be acquired from the base station via a radio resource control (RRC) signaling.

In addition, in a case that the detection unit 102 performs the Cat.4 LBT with respect to the first channel of the newly selected candidate beam, if a random number generated in a previous Cat.4 LBT is decremented to a remaining random number that is not equal to zero when the previous Cat.4 LBT mechanism is interrupted, the remaining random number is determined as a random number used in a current Cat.4 LBT. In other words, in the Cat.4 LBT with respect to the newly selected candidate beam, the time duration of the random back-off stage takes into account the time duration of the back-off stage in the previous Cat.4 LBT. In this way, the delay of the beam failure recovery processing can be further reduced.

In a case that the energy detection indicates that the first channel is idle before the first timer expires, the BFRQ is transmitted via the first channel and the first timer is reset.

Figure 11 shows an example that the Cat.4 LBT mechanism is completed when the first timer has not expired. In this case, the LBT is completed when N is decremented to zero, indicating that the first channel is idle, so that the UE may immediately transmit the BFRQ.

In addition, similar to the first embodiment, in a case that the BFRQ transmitted by the UE collides with data or signaling transmitted by other user equipment on the selected candidate beam, the UE performs random back-off and then retransmits the BFRQ.

Accordingly, although not shown in Figure 8, the electronic apparatus 200 may further include a transmission unit to transmit the BFRQ.

According to the embodiment, the electronic apparatus 200 can quickly transmit the BFRQ by timely replacing a candidate beam in a case that channel resources corresponding to the candidate beam is occupied for a long time period, thereby reducing the delay of the beam failure recovery.

### <Third Embodiment

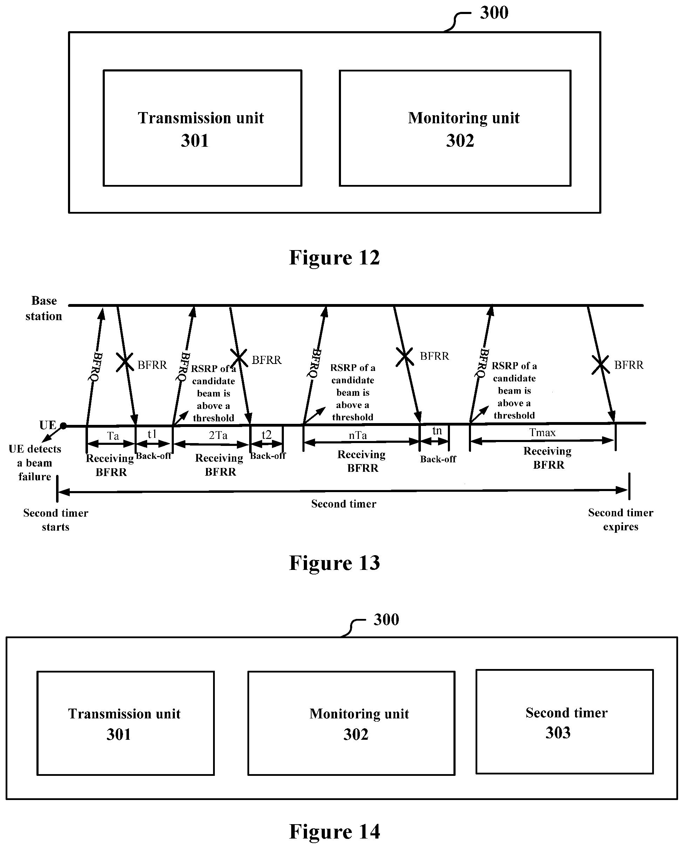

Figure 12 is a block diagram showing function modules of an electronic apparatus 300 for wireless communications according to another embodiment of the present disclosure. The electronic apparatus 300 includes a transmission unit 301 and a monitoring unit 302. The transmission unit 301 is configured to transmit a BFRQ to a base station on a first channel of a selected candidate beam, in a case that a beam failure occurs in a downlink of an unlicensed band. The monitoring unit 302 is configured to monitor a BFRR from the base station within a dynamic time window after transmitting the BFRQ. In a case that the monitoring unit 302 monitors no BFRR, the transmission unit 301 is configured to retransmit the BFRQ and the monitoring unit 302 is configured to monitor within a new dynamic time window. Duration of the dynamic time window is positively correlated to the number of times of the BFRQ having been transmitted.

The transmission unit 301 and the monitoring unit 302 may be implemented by one or more processing circuitries, and the processing circuitries may be implemented, for example, as a chip. Moreover, it should be understood that various functional units in the apparatus shown in Figure 12 are only logical modules divided according to their specific functions, and are not intended to limit specific implementation manners.

The electronic apparatus 300 may be, for example, provided on user equipment (UE) side, or may be communicatively connected to the UE. Here, it is further to be noted that the electronic apparatus 300 may be implemented in a chip level or an apparatus level. For example, the electronic apparatus 300 may function as the use equipment itself and may further include external devices such as storage, a transceiver and the like (not shown in Figure 12). The storage may be configured to store programs which are required to be executed when the UE implements various functions and related data information. The transceiver may include one or more communication interfaces to support communications with different apparatus (for example, a base station, other UE or the like). Implementations of the transceiver are not limited herein.

In the embodiment, the first channel may similarly be one of the following: the PRACH, the PUCCH and the PUSCH.

In Rel-15, when UE transmits the BFRQ within a timeslot n, it will monitor the response BFRR from the base station within a window from a timeslot n+4. The window is configured by a high-level signaling parameter. If the UE receives no BFRR from the base station within the window, the UE performs random back-off for a time period and retransmits the BFRQ. On the unlicensed band, there may be a case that the base station cannot transmit the BFRR since the LBT on the base station side indicates that a channel is occupied, in this case, the duration of the window should be properly increased. In addition, considering various cases that receiving no BFRR may not be caused by the LBT on the base station side, a solution of setting a dynamic time window is provided according to the embodiment of the present disclosure.

In an embodiment, the duration of the dynamic time window may be set to be a product of duration of a basic time window with the number of times of the BFRQ having been transmitted. Figure 13 shows an example for setting a dynamic time window. The dynamic time window is set to Ta after the BFRQ is transmitted for the first time, and the dynamic time window is set to 2Ta after the BFRQ is transmitted for the second time, and so on. In addition, in the example shown in Figure 13, random back-off is performed before the BFRQ is retransmitted.

In order to avoid a large delay caused by the increase of the duration of the dynamic time window, maximum duration of the dynamic time window may be limited, for example, to Tmax. The monitoring unit 302 is configured to set the duration of the dynamic time window as the maximum duration, in a case that the duration of the dynamic time window set according to the number of times of the BFRQ having been transmitted is greater than the maximum duration. As an alternative/supplement, the maximum number of times of transmitting the BFRQ may also be limited.

As an example, as shown in Figure 14, the electronic apparatus 300 may further be provided with a second timer 303. The second timer 303 is configured to be started when a beam failure is detected. The monitoring unit 302 is configured to stop a current operation and determine that the beam failure recovery is failed in a case that no BFRR is received when the second timer 303 expires.

The setting of the above dynamic time window, such as information of the duration of the basic time window, information of the maximum duration of the dynamic time window, information of time duration of the second timer, and information of the maximum number of times of transmitting the BFRQ, may be acquired from the base station via the RRC signaling.

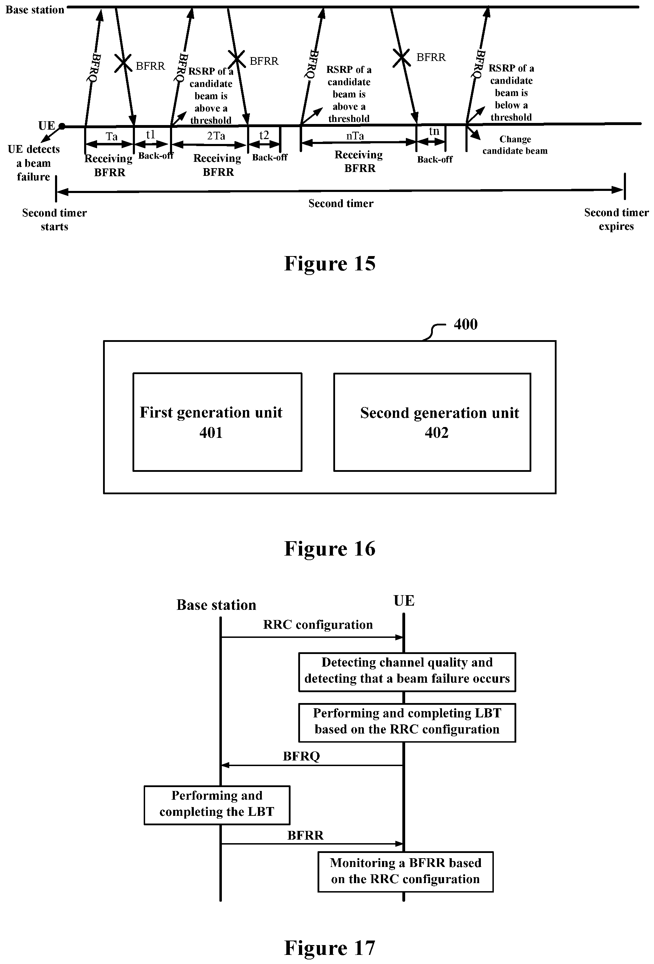

In addition, RSRP of the selected candidate beam may change in a case that the beam failure recovery processing lasts for a long time period. Therefore, before the transmission unit 301 retransmits the BFRQ each time, the monitoring unit 302 may further measure RSRP of the current candidate beam. If the measured RSRP is lower than a predetermined threshold, a candidate beam is reselected, the transmission unit 301 transmits the BFRQ on a first channel of the newly selected candidate beam, and the monitoring unit 302 monitors the BFRR on the first channel of the newly selected candidate beam, as shown in Figure 15. In this case, the second timer may be reset.

According to the embodiment, the electronic apparatus 300 can adapt to requirements of the beam failure recovery processing on the unlicensed band by adopting the dynamic time window mechanism, thereby improving efficiency of the beam failure recovery and reducing the delay for the beam failure recovery. The electronic apparatuses 100 to 300 described in the first to third embodiments may be used separately or in combination with each other without any limitation.

### <Fourth Embodiment>

Figure 16 is a block diagram showing function modules of an electronic apparatus 400 for wireless communications according to another embodiment of the present disclosure. As shown in Figure 16, the electronic apparatus 400 includes a first generation unit 401. The first generation unit 401 is configured to generate configuration for a beam failure recovery operation of UE and contain the configuration in a RRC signaling to be provided to the UE, and generate a BFRR in response to a BFRQ from the UE. The configuration includes one or more of the following: time duration of a first timer for timing energy detection of a candidate beam, the number of times for reselecting the candidate beam with respect to one beam failure, setting of a dynamic time window for the user equipment to wait for the beam failure recovery response, the number of times for transmitting the beam failure recovery request with respect to one beam failure, and time duration of a second timer for timing the waiting of the user equipment for the beam failure recovery response.

The first generation unit 401 and the second generation unit 402 may be implemented by one or more processing circuitries, and the processing circuitries may be implemented, for example, as a chip. Moreover, it should be understood that various functional units in the apparatus shown in Figure 16 are only logical modules divided according to their specific functions, and are not intended to limit specific implementation manners.

The electronic apparatus 400 may be, for example, provided on a base station side, or may be communicatively connected to the base station. Here, it is further to be noted that the electronic apparatus 400 may be implemented in a chip level or an apparatus level. For example, the electronic apparatus 400 may function as the base station itself and may further include external devices such as storage, a transceiver and the like (not shown in Figure 16). The storage may be configured to store programs which are required to be executed when the base station implements various functions and related data information. The transceiver may include one or more communication interfaces to support communications with different apparatus (for example, user equipment, other base station and the like). Implementations of the transceiver are not limited herein.

The electronic apparatus 400 according to the embodiment may provide an RRC configuration signaling and a BFRR corresponding to one or more of the electronic apparatuses 100 to 300 according to the foregoing embodiments. The configuration of the RRC regarding the beam failure recovery operation has been described in detail in the first embodiment to the third embodiment, which is not repeated herein.

The electronic apparatus 400 according to the embodiment may achieve high-efficiency, low-latency beam failure recovery by configuring the beam failure recovery operation of the user equipment.

For ease of understanding, Figure 17 shows an information procedure for beam switching between a base station and user equipment. As shown in Figure 17, first, the base station transmits the RRC configuration to the user equipment. The RRC configuration may include one or more of the following: time duration of a first timer for timing energy detection of a candidate beam, the number of times for reselecting the candidate beam with respect to one beam failure, setting of a dynamic time window for the user equipment to wait for the beam failure recovery response, the number of times for transmitting the beam failure recovery request with respect to one beam failure, and time duration of a second timer for timing the waiting of the user equipment for the beam failure recovery response. The UE detects quality of a current beam and detects that a beam failure occurs. After selecting a candidate beam based on the RSRP, the UE performs the Cat.4 LBT with respect to the PRACH (alternatively, can also be PUCCH or PUSCH) of the candidate beam based on the above configuration, and transmits a BFRQ to the base station when the Cat.4 LBT is completed. Similarly, the base station transmits a BFRR to the UE when LBT is completed, and the UE monitors the BFRR based on the above configuration.

It should be noted that the information procedure shown in Figure 17 is merely schematic, and do not limit the present disclosure.

### <Fifth Embodiment

In the above description of embodiments of the electronic apparatuses for wireless communications, it is apparent that some processing and methods are further disclosed. In the following, a summary of the methods are described without repeating details that are described above. However, it should be noted that although the methods are disclosed when describing the electronic apparatuses for wireless communications, the methods are unnecessary to adopt those components or to be performed by those components described above. For example, implementations of the electronic apparatuses for wireless communications may be partially or completely implemented by hardware and/or firmware. Methods for wireless communications to be discussed blow may be completely implemented by computer executable programs, although these methods may be implemented by the hardware and/or firmware for implementing the electronic apparatuses for wireless communications.

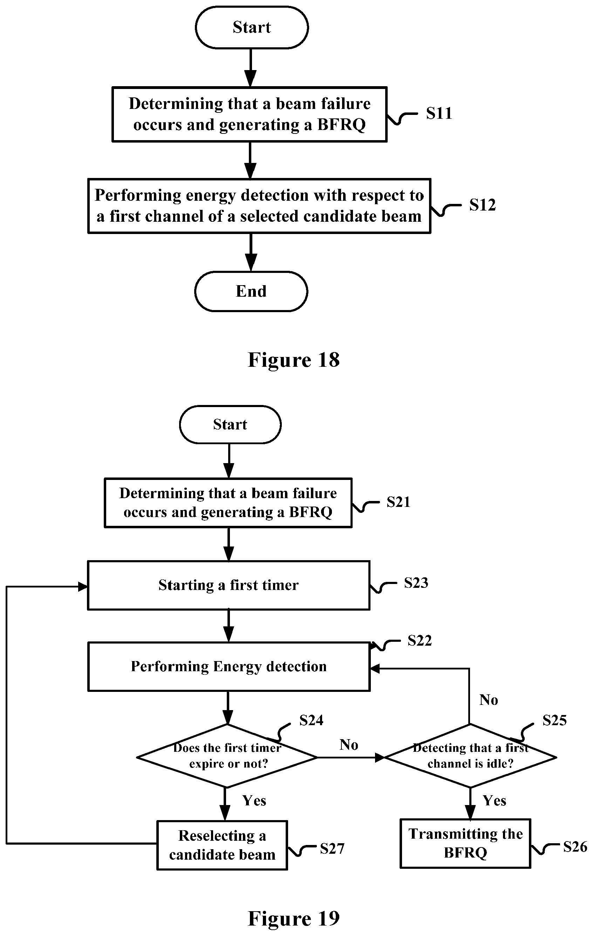

Figure 18 is a flow chart of a method for wireless communications according to an embodiment of the present disclosure. The method includes the following steps S11 and S12. In step S11, it is determined that a beam failure occurs in a downlink of an unlicensed band and a BFRQ is generated. In step S12, energy detection is performed with respect to a first channel of a selected candidate beam, and the BFRQ is transmitted via the first channel when the energy detection indicates the first channel being idle. The candidate beam may be selected by multiple user equipment simultaneously. The method may be performed on the UE side.

This method corresponds to the apparatus 100 described in the first embodiment. For specific details, one may refer to the above corresponding description, and details are not repeated herein.

Figure 19 is a flow chart of a method for wireless communications according to an embodiment of the present disclosure. The method includes the following steps S21 to S27. In step S21, it is determined that a beam failure occurs in a downlink of an unlicensed band and a BFRQ is generated. In step S22, energy detection is performed with respect to a first channel of a selected candidate beam, and the BFRQ is transmitted via the first channel when the energy detection indicates the first channel being idle. In step S23, a first timer starts at the same time as the energy detection begins. In step S24, it is checked whether the first timer has expired. In step S25, if it is found that the first timer has not expired in step S24, it is determined whether the energy detection indicates the first channel being idle (for example, it is determined whether the LBT mechanism is completed). In step S26, if it is determined that the energy detection indicates the first channel being idle in step S25, the BFRQ can be transmitted, and otherwise the energy detection continues. In step S27, if it is found that the first timer has expired in step S24, a candidate beam is reselected, and the energy detection is performed with respect to a first channel of the newly selected candidate beam, that is, the method returns to step S23. The method may be performed on the UE side.

The method corresponds to the apparatus 200 described in the second embodiment. For specific details, one may refer to the above corresponding description, and details are not repeated herein.

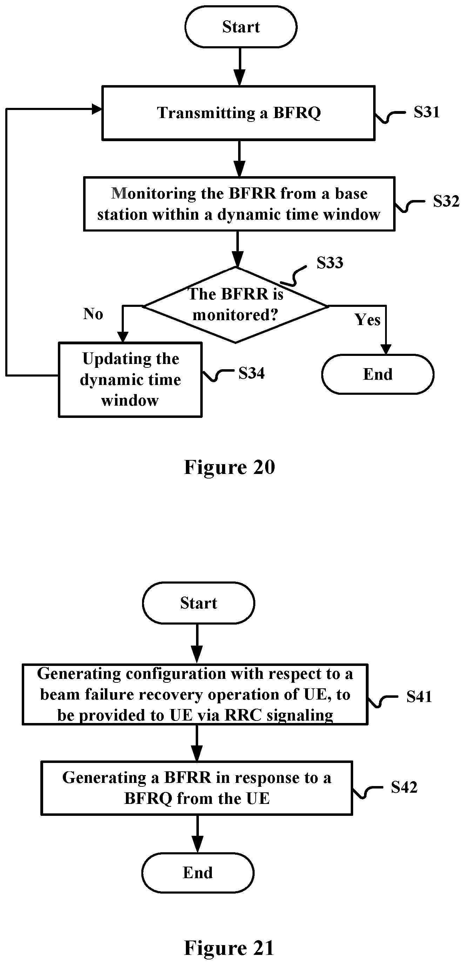

Figure 20 is a flow chart of a method for wireless communications according to an embodiment of the present disclosure. The method includes the following steps S31 to S34. In step S31, in a case that a beam failure occurs in a downlink of an unlicensed band, a BFRQ is transmitted to a base station on a first channel of a selected candidate beam. In step S32, a BFRR from the base station is monitored within a dynamic time window after transmitting the BFRQ. In step S33, it is determined whether the BFRR is monitored. In a case of monitoring no BFRR in step S33, the method proceeds to step S34 to update the dynamic time window. Duration of the dynamic time window is positively correlated to the number of times of the BFRQ having been transmitted. Then the method returns to step S31 to retransmit the BFRQ and monitor the BFRR within the new dynamic time window. This method may be performed on the UE side.

The method corresponds to the apparatus 300 described in the third embodiment. For specific details, one may refer to the above corresponding description, and details are not repeated herein.

Figure 21 is a flow chart of a method for wireless communications according to an embodiment of the present disclosure. The method includes the following step S41. In step S41, configuration with respect to a beam failure recovery operation of the UE is generated and contained in an RRC signaling to be provided to the UE, and BFRR is generated in response to a BFRQ from the UE. The configuration includes one or more of the following: time duration of a first timer for timing energy detection of a candidate beam, the number of times for reselecting the candidate beam with respect to one beam failure, setting of a dynamic time window for the UE to wait for the BFRR, the number of times for transmitting the BFRQ with respect to one beam failure, and time duration of a second timer for timing the waiting of the UE for the BFRR

The method corresponds to the apparatus 400 described in the third embodiment. For specific details, one may refer to the above corresponding description, and details are not repeated herein.

It should be noted that the above methods may be performed in combination with each other or separately.

The technology according to the present disclosure is applicable to various products.

For example, the electronic apparatus 400 may be implemented as various base stations. The base station may be implemented as any type of evolved node B (eNB) or gNB (5G base station). The eNB includes, for example, a macro eNB and a small eNB. The small eNB may be an eNB covering a cell smaller than a macro cell, such as a pico eNB, a micro eNB, and a home (femto) eNB. The case for the gNB is similar to the above. Alternatively, the base station may be implemented as any other type of base station, such as a NodeB and a base transceiver station (BTS). The base station may include: a main body (also referred to as a base station apparatus) configured to control wireless communication; and one or more remote wireless head ends (RRH) located at positions different from the main body. In addition, various types of user equipment may each serves as a base station by performing functions of the base station temporarily or semi-permanently.

Any one of the electronic apparatus 100 to 400 may be implemented as various user equipments. The user equipment may be implemented as a mobile terminal (such as a smartphone, a tablet personal computer (PC), a notebook PC, a portable game terminal, a portable/dongle mobile router, and a digital camera) or a vehicle terminal (such as a vehicle navigation apparatus). The user equipment may also be implemented as a terminal that performs machine-to-machine (M2M) communication (also referred to as a machine type communication (MTC) terminal). Furthermore, the user equipment may be a wireless communication module (such as an integrated circuitry module including a single die) mounted on each of the terminals described above.

### [Application Examples regarding A Base Station]

### (First Application Example)

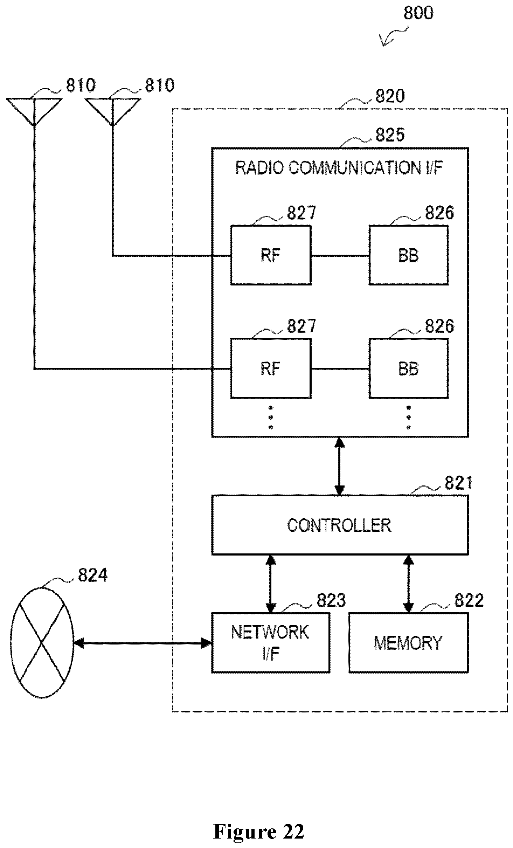

Figure 22 is a block diagram showing a first example of an exemplary configuration of an eNB or gNB to which technology according to the present disclosure may be applied. It should be noted that the following description is given by taking the eNB as an example, which is also applicable to the gNB. An eNB 800 includes one or more antennas 810 and a base station apparatus 820. The base station apparatus 820 and each of the antennas 810 may be connected to each other via a radio frequency (RF) cable.

Each of the antennas 810 includes a single or multiple antennal elements (such as multiple antenna elements included in a multiple-input multiple-output (MIMO) antenna), and is used for the base station apparatus 820 to transmit and receive wireless signals. As shown in Figure 22, the eNB 800 may include the multiple antennas 810. For example, the multiple antennas 810 may be compatible with multiple frequency bands used by the eNB 800. Although Figure 22 shows the example in which the eNB 800 includes the multiple antennas 810, the eNB 800 may also include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. If the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as L1, Media Access Control (MAC), Radio Link Control (RLC), and a Packet Data Convergence Protocol (PDCP)). The BB processor 826 may have a part or all of the above-described logical functions instead of the controller 821. The BB processor 826 may be a memory storing communication control programs, or a module including a processor and a related circuit configured to execute the programs. Updating the program may allow the functions of the BB processor 826 to be changed. The module may be a card or a blade that is inserted into a slot of the base station apparatus 820. Alternatively, the module may also be a chip that is mounted on the card or the blade. Meanwhile, the RF circuit 827 may include, for example, a mixer, a filter, and an amplifier, and transmits and receives wireless signals via the antenna 810.

As shown in Figure 22, the radio communication interface 825 may include the multiple BB processors 826. For example, the multiple BB processors 826 may be compatible with multiple frequency bands used by the eNB 800. The radio communication interface 825 may include multiple RF circuits 827, as shown in Figure 22. For example, the multiple RF circuits 827 may be compatible with multiple antenna elements. Although Figure 22 shows the example in which the radio communication interface 825 includes the multiple BB processors 826 and the multiple RF circuits 827, the radio communication interface 825 may also include a single BB processor 826 and a single RF circuit 827.

In the eNB 800 shown in Figure 22, the transceiver of the electronic apparatus 400 may be implemented by the radio communication interface 825. At least part of the functions may also be implemented by the controller 821. For example, the controller 821 may generate an RRC signaling for the UE which includes a configuration for a beam failure recovery operation and generate a BFRQ response, by performing functions of the first generation unit 401 and the second generation unit 402.

### [Second Application Example]

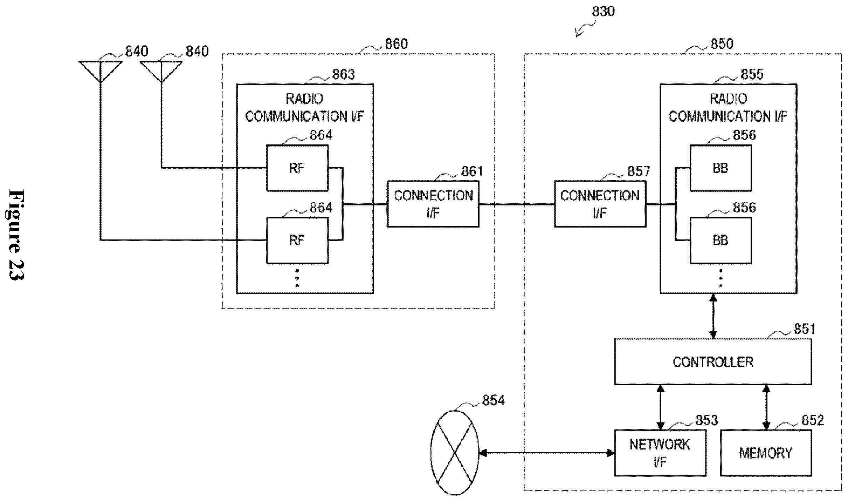

Figure 23 is a block diagram showing a second example of the exemplary configuration of an eNB or gNB to which the technology according to the present disclosure may be applied. It should be noted that the following description is given by taking the eNB as an example, which is also applied to the gNB. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high speed line such as an optical fiber cable.

Each of the antennas 840 includes a single or multiple antennal elements (such as multiple antenna elements included in an MIMO antenna), and is used for the RRH 860 to transmit and receive wireless signals. As shown in Figure 23, the eNB 830 may include the multiple antennas 840. For example, the multiple antennas 840 may be compatible with multiple frequency bands used by the eNB 830. Although Figure 23 shows the example in which the eNB 830 includes the multiple antennas 840, the eNB 830 may also include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 22.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 22, except that the BB processor 856 is connected to an RF circuit 864 of the RRH 860 via the connection interface 857. As show in Figure 23, the radio communication interface 855 may include the multiple BB processors 856. For example, the multiple BB processors 856 may be compatible with multiple frequency bands used by the eNB 830. Although Figure 23 shows the example in which the radio communication interface 855 includes the multiple BB processors 856, the radio communication interface 855 may also include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives wireless signals via the antenna 840. The radio communication interface 863 may typically include, for example, the RF circuit 864. The RF circuit 864 may include, for example, a mixer, a filter and an amplifier, and transmits and receives wireless signals via the antenna 840. The radio communication interface 863 may include multiple RF circuits 864, as shown in Figure 23. For example, the multiple RF circuits 864 may support multiple antenna elements. Although Figure 23 shows the example in which the radio communication interface 863 includes the multiple RF circuits 864, the radio communication interface 863 may also include a single RF circuit 864.

In the eNB 830 shown in Figure 23, the transceiver of the electronic apparatus 400 may be implemented by the radio communication interface 825. At least part of the functions may also be implemented by the controller 821. For example, the controller 821 may generate an RRC signaling for the UE which includes configuration for a beam failure recovery operation and generate a BFRQ response, by performing functions of the first generation unit 401 and the second generation unit 402.

### [Application Examples regarding the User Equipment]

### [First Application Example]

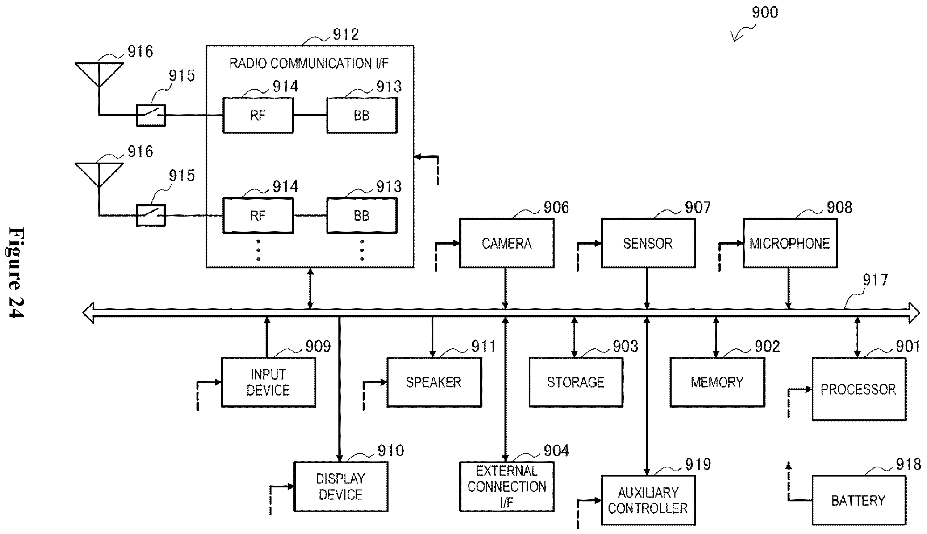

Figure 24 is a block diagram showing an exemplary configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes a RAM and a ROM, and stores a program executed by the processor 901 and data. The storage 903 may include a storage medium such as a semiconductor memory and a hard disk. The external connection interface 904 is an interface for connecting an external device (such as a memory card and a universal serial bus (USB) device) to the smartphone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds that are inputted to the smartphone 900 to audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts audio signals that are outputted from the smartphone 900 to sounds.

The radio communication interface 912 supports any cellular communication scheme (such as LTE and LTE-advanced), and performs a wireless communication. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communication. The RF circuit 914 may include, for example, a mixer, a filter and an amplifier, and transmits and receives wireless signals via the antenna 916. It should be noted that although Figure 24 shows a case that one RF link is connected to one antenna, which is only illustrative, and a case that one RF link is connected to multiple antennas through multiple phase shifters may also exist. The radio communication interface 912 may be a chip module having the BB processor 913 and the RF circuit 914 integrated thereon. The radio communication interface 912 may include multiple BB processors 913 and multiple RF circuits 914, as shown in Figure 24. Although Figure 24 shows the example in which the radio communication interface 912 includes the multiple BB processors 913 and the multiple RF circuits 914, the radio communication interface 912 may also include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a radio local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. The smartphone 900 may include the multiple antennas 916, as shown in Figure 24 Although Figure 24 shows the example in which the smartphone 900 includes the multiple antennas 916, the smartphone 900 may also include a single antenna 916.

Furthermore, the smartphone 900 may include the antenna 916 for each wireless communication scheme. In this case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smart phone 900 shown in Figure 24 via feeder lines that are partially shown as dashed lines in Figure 24. The auxiliary controller 919, operates a minimum necessary function of the smart phone 900, for example, in a sleep mode.

In the smart phone 900 shown in Figure 24, the transceiver or the transmission unit of electronic apparatuses 100 to 300 may be implemented by the radio communication interface 912. At least part of functions may also be implemented by the processor 901 or the auxiliary controller 919. For example, the processor 901 or the auxiliary controller 919 can implement the competitive use of the channel of the candidate beam for transmitting the BFRQ by performing the functions of the determination unit 101, the generation unit 102, the detection unit 103 and the transmission unit 104, and implement timely replacement of the candidate beam by performing the functions of the determination unit 201, the detection unit 202 and the first timer 203, and implement the dynamic time window mechanism for monitoring the BFRR by performing the functions of the transmission unit 301, the monitoring unit 302 and the second timer 303.

### [Second Application Example]

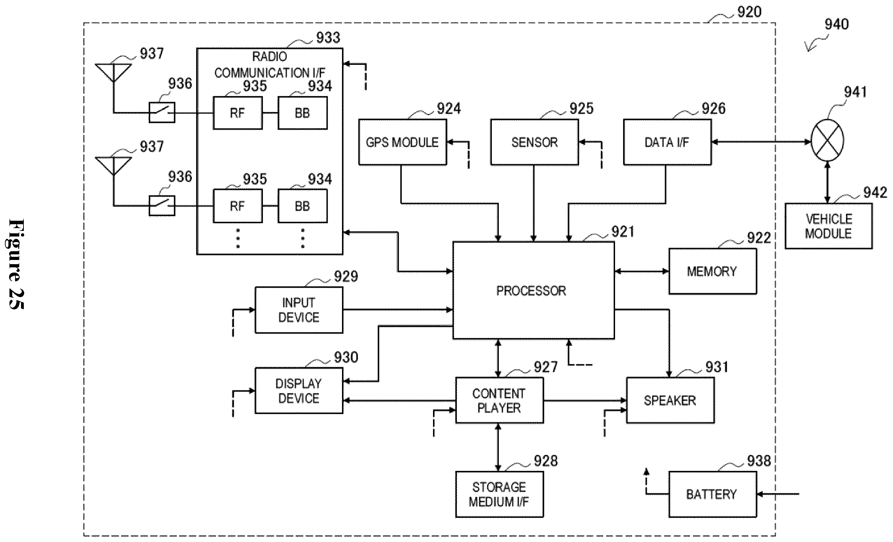

Figure 25 is a block diagram showing an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes RAM and ROM, and stores a program that is executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not shown, and acquires data (such as vehicle speed data) generated by the vehicle.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or content that is reproduced. The speaker 931 outputs a sound for the navigation function or the content that is reproduced.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communication. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as shown in Figure 25. Although Figure 25 shows the example in which the radio communication interface 933 includes the multiple BB processors 934 and the multiple RF circuits 935, the radio communication interface 933 may also include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used by the radio communication interface 933 to transmit and receive wireless signals. As shown in Figure 25, the car navigation apparatus 920 may include the multiple antennas 937. Although Figure 25 shows the example in which the car navigation apparatus 920 includes the multiple antennas 937, the car navigation apparatus 920 may also include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to the blocks of the car navigation apparatus 920 shown in Figure 25 via feeder lines that are partially shown as dash lines in Figure 25. The battery 938 accumulates power supplied from the vehicle.

In the car navigation apparatus 920 shown in Figure 25, the transceiver or the transmission unit of electronic apparatuses 100 to 300 may be implemented by the radio communication interface 912. At least part of functions may also be implemented by the processor 901 or the auxiliary controller 919. For example, the processor 901 or the auxiliary controller 919 may implement the competitive use of the channel of the candidate beam for transmitting the BFRQ by performing the functions of the determination unit 101, the generation unit 102, the detection unit 103 and the transmission unit 104, and implement timely replacement of the candidate beam by performing the functions of the determination unit 201, the detection unit 202 and the first timer 203, and implement the dynamic time window mechanism for monitoring the BFRR by performing the functions of the transmission unit 301, the monitoring unit 302 and the second timer 303.

The technology of the present disclosure may also be implemented as an in-vehicle system (or a vehicle) 940 including one or more blocks of the car navigation apparatus 920, the in-vehicle network 941 and a vehicle module 942. The vehicle module 942 generates vehicle data (such as a vehicle speed, an engine speed, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

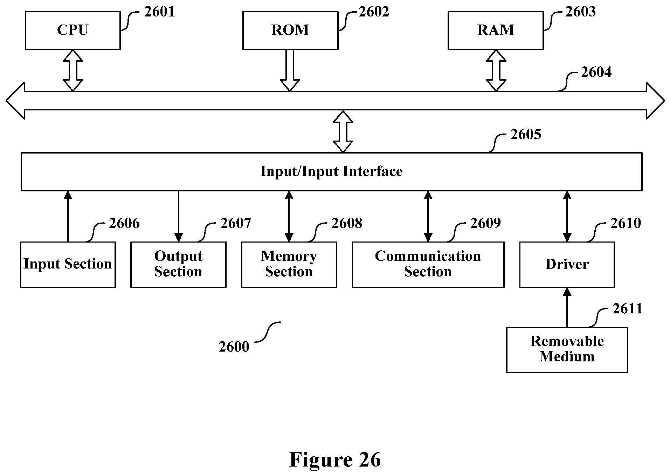

In the case where the present disclosure is realized with software or firmware, a program constituting the software is installed in a computer with a dedicated hardware structure (e.g. the general computer 2600 shown in Figure 26) from a storage medium or network, wherein the computer is capable of implementing various functions when installed with various programs.

In Figure 26, a central processing unit (CPU) 2601 executes various processing according to a program stored in a read-only memory (ROM) 2602 or a program loaded to a random access memory (RAM) 2603 from a memory section 2608. The data needed for the various processing of the CPU 2601 may be stored in the RAM 2603 as needed. The CPU 2601, the ROM 2602 and the RAM 2603 are linked with each other via a bus 2604. An input/output interface 2605 is also linked to the bus 2604.

The following components are linked to the input/output interface 2605: an input section 2606 (including keyboard, mouse and the like), an output section 2607 (including displays such as a cathode ray tube (CRT), a liquid crystal display (LCD), a loudspeaker and the like), a memory section 2608 (including hard disc and the like), and a communication section 2609 (including a network interface card such as a LAN card, modem and the like). The communication section 2609 performs communication processing via a network such as the Internet. A driver 2610 may also be linked to the input/output interface 2605, if needed. If needed, a removable medium 2611, for example, a magnetic disc, an optical disc, a magnetic optical disc, a semiconductor memory and the like, may be installed in the driver 2610, so that the computer program read therefrom is installed in the memory section 2608 as appropriate.

In the case where the foregoing series of processing is achieved through software, programs forming the software are installed from a network such as the Internet or a memory medium such as the removable medium 2611.

It should be appreciated by those skilled in the art that the memory medium is not limited to the removable medium 2611 shown in Figure 26, which has program stored therein and is distributed separately from the apparatus so as to provide the programs to users. The removable medium 2611 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 2602 and the memory section 2608 in which programs are stored, and can be distributed to users along with the device in which they are incorporated.

To be further noted, in the apparatus, method and system according to the present disclosure, the respective components or steps can be decomposed and/or recombined. These decompositions and/or recombinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic apparatus for wireless communications, comprising:
processing circuitry, configured to:
determine that a beam failure occurs in a downlink of an unlicensed band and generate a beam failure recovery request;
perform energy detection with respect to a first channel of a selected candidate beam, so as to transmit the beam failure recovery request via the first channel when the energy detection indicates the first channel being idle;
start a first timer at the same time as the energy detection begins; and
in a case that the energy detection does not indicate the first channel being idle when the first timer expires, reselect a candidate beam and perform the energy detection with respect to a first channel of the newly selected candidate beam.

2. The electronic apparatus according to claim 1, wherein the processing circuitry is further configured to generate a report message to inform an upper layer protocol, in a case that the number of times of the candidate beam having been reselected exceeds a predetermined number.

3. The electronic apparatus according to claim 1, wherein the energy detection comprises a listen before talk (LBT) mechanism.

4. The electronic apparatus according to claim 3, wherein the energy detection comprises a Cat.4 LBT mechanism.

5. The electronic apparatus according to claim 1, wherein the processing circuitry is further configured to transmit the beam failure recovery request via the first channel, and reset the first timer, in a case that the energy detection indicates the first channel being idle before the first timer expires.

6. The electronic apparatus according to claim 4, wherein the processing circuitry is configured to:
determine, in a case of performing the Cat.4 LBT with respect to the first channel of the newly selected candidate beam and if a random number generated in a previous Cat.4 LBT mechanism is decremented to a remaining random number that is not equal to zero when the previous Cat.4 LBT mechanism is interrupted, the remaining random number as a random number used in a current Cat. 4 LBT mechanism.

7. The electronic apparatus according to claim 1, wherein the first channel is one of the following: a Physical Random Access Channel, a Physical Uplink Control Channel and a Physical Uplink Shared Channel.

8. The electronic apparatus according to claim 2, wherein the processing circuitry is further configured to acquire time duration of the first timer and information of the predetermined number from the base station via a radio resource control signaling.

9. The electronic apparatus according to claim 1, wherein the processing circuitry is further configured to select the candidate beam based on a reference signal receiving power of the beam.

10. The electronic apparatus according to claim 5, wherein the processing circuitry is further configured to perform random back-off and then retransmit the beam failure recovery request, in a case that the transmitted beam failure recovery request collides with data or signaling transmitted by other user equipment on the selected candidate beam.

11. An electronic apparatus for wireless communications, comprising:
processing circuitry, configured to:
in a case that a beam failure occurs in a downlink of an unlicensed band, transmit a beam failure recovery request to a base station on a first channel of a selected candidate beam;
monitor a beam failure recovery response from the base station within a dynamic time window after transmitting the beam failure recovery request; and
retransmit the beam failure recovery request in a case of monitoring no beam failure recovery response and monitor within a new dynamic time window,
wherein duration of the dynamic time window is positively correlated to the number of times of the beam failure recovery request having been transmitted.

12. The electronic apparatus according to claim 11, wherein the processing circuitry is further configured to start a second timer when the beam failure is detected, and stop a current operation and determine that the beam failure recovery fails in a case that no beam failure recovery response is received when the second timer expires.

13. The electronic apparatus according to claim 11, wherein the processing circuitry is further configured to set the duration of the dynamic time window to be a product of duration of a basic time window with the number of times of the beam failure recovery request having been transmitted.

14. The electronic apparatus according to claim 11, wherein the processing circuitry is further configured to limit maximum duration of the dynamic time window, and set the duration of the dynamic time window to the maximum duration in a case that the duration of the dynamic time window set according to the number of times of the beam failure recovery request having been transmitted is greater than the maximum duration.

15. The electronic apparatus according to claim 13, wherein the processing circuitry is further configured to acquire information of the duration of the basic time window from the base station via a radio resource control signaling.

16. The electronic apparatus according to claim 14, wherein the processing circuitry is further configured to acquire information of the maximum duration of the dynamic time window from the base station via a radio resource control signaling.

17. The electronic apparatus according to claim 11, wherein the processing circuitry is further configured to limit a maximum number of times of transmitting the beam failure recovery request.

18. The electronic apparatus according to claim 11, wherein the processing circuitry is further configured to measure a reference signal receiving power of the current candidate beam before retransmitting the beam failure recovery request each time; and reselect a candidate beam, if the measured reference signal receiving power is lower than a predetermined threshold, and transmit the beam failure recovery request and monitor the beam failure recovery response on a first channel of the newly selected candidate beam.

19. The electronic apparatus according to claim 11, wherein the first channel is one of the following: a Physical Random Access Channel, a Physical Uplink Control Channel and a Physical Uplink Shared Channel.

20. The electronic apparatus according to claim 11, wherein the processing circuitry is further configured to:
perform random back-off before retransmitting the beam failure recovery request.

21. An electronic apparatus for wireless communications, comprising:
processing circuitry, configured to:
determine that a beam failure occurs in a downlink of an unlicensed band and generate a beam failure recovery request; and
perform energy detection with respect to a first channel of a selected candidate beam, so as to transmit the beam failure recovery request via the first channel when the energy detection indicates the first channel being idle,
wherein the candidate beam may be selected by multiple user equipment simultaneously.

22. The electronic apparatus according to claim 21, wherein the energy detection comprises a listen before talk (LBT) mechanism.

23. The electronic apparatus according to claim 22, wherein the energy detection comprises a Cat.4 LBT mechanism.

24. The electronic apparatus according to claim 21, wherein the processing circuitry is further configured to perform random back-off and then retransmit the beam failure recovery request, in a case that the transmitted beam failure recovery request collides with data or signaling transmitted by other user equipment on the selected candidate beam.

25. The electronic apparatus according to claim 21, wherein the first channel is a Physical Random Access Channel.

26. The electronic apparatus according to claim 21, wherein the first channel is a Physical Uplink Control Channel.

27. The electronic apparatus according to claim 26, wherein the processing circuitry is configured to inform a base station that the beam failure has occurred by a scheduling request on the Physical Uplink Control Channel; and transmit the beam failure recovery request using physical uplink shared channel resources allocated by the base station for the user equipment based on the scheduling request.

28. The electronic apparatus according to claim 27, wherein the scheduling request indicates that the beam failure has occurred by using an all-zero or all-one specific sequence.

29. The electronic apparatus according to claim 26, wherein the processing circuitry is configured to transmit the beam failure recovery request via newly defined channel status information on the Physical Uplink Control Channel, wherein the newly defined channel status information comprises a specific bit sequence representing the selected candidate beam.

30. The electronic apparatus according to claim 21, wherein the first channel is a Physical Uplink Shared Channel.

31. The electronic apparatus according to claim 30, wherein the processing circuitry is configured to transmit the beam failure recovery request via a newly defined MAC CE, wherein the newly defined MAC CE comprises a specific bit sequence representing the selected candidate beam.

32. An electronic apparatus for wireless communications, comprising:
processing circuitry, configured to:
generate configuration for a beam failure recovery operation of user equipment and contain the configuration in a radio resource control signaling to be provided to the user equipment; and
generate a beam failure recovery request response in response to a beam failure recovery request from the user equipment,
wherein the configuration comprises one or more of the following: time duration of a first timer for timing energy detection of a candidate beam, the number of times for reselecting the candidate beam with respect to one beam failure, setting of a dynamic time window for the user equipment to wait for the beam failure recovery response, the number of times for transmitting the beam failure recovery request with respect to one beam failure, and time duration of a second timer for timing the waiting of the user equipment for the beam failure recovery response.

33. A method for wireless communications, comprising:
determining that a beam failure occurs in a downlink of an unlicensed band and generate a beam failure recovery request;
performing energy detection with respect to a first channel of a selected candidate beam, so as to transmit the beam failure recovery request via the first channel when the energy detection indicates the first channel being idle;
starting a first timer at the same time as the energy detection begins; and
in a case that the energy detection does not indicate the first channel being idle when the first timer expires, reselecting a candidate beam and perform the energy detection with respect to a first channel of the newly selected candidate beam.

34. A method for wireless communications, comprising:
in a case that a beam failure occurs in a downlink of an unlicensed band, transmitting a beam failure recovery request to a base station on a first channel of a selected candidate beam;
monitoring a beam failure recovery response from the base station within a dynamic time window after transmitting the beam failure recovery request; and
retransmitting the beam failure recovery request in a case of monitoring no beam failure recovery response and monitor within a new dynamic time window,
wherein duration of the dynamic time window is positively correlated to the number of times of the beam failure recovery request having been transmitted.

35. A method for wireless communications, comprising:
determining that a beam failure occurs in a downlink of an unlicensed band and generating a beam failure recovery request; and
performing energy detection with respect to a first channel of a selected candidate beam, so as to transmit the beam failure recovery request via the first channel when the energy detection indicates the first channel being idle,
wherein the candidate beam may be selected by multiple user equipment simultaneously.

36. A method for wireless communications, comprising:
generating configuration for a beam failure recovery operation of user equipment and containing the configuration in a radio resource control signaling to be provided to the user equipment; and
generating a beam failure recovery request response in response to a beam failure recovery request from the user equipment,
wherein the configuration comprises one or more of the following: time duration of a first timer for timing energy detection of a candidate beam, the number of times for reselecting the candidate beam with respect to one beam failure, setting of a dynamic time window for the user equipment to wait for the beam failure recovery response, the number of times for transmitting the beam failure recovery request with respect to one beam failure, and time duration of a second timer for timing the waiting of the user equipment for the beam failure recovery response.

37. A computer-readable storage medium having computer-executable instructions stored thereon, which when executed, cause the method for wireless communications according to any one of claims 33 to 36 to be performed.
